# EUROPÄISCHE PATENTANMELDUNG

(11) **EP 2 604 121 A1**
(43) Veröffentlichungstag der Anmeldung: **19.06.2013**
(21) Anmeldenummer: 11193434.5
(22) Anmeldetag: 14.12.2011
(51) Int. Cl.: A22C 13/00, A23L 1/232

(54) **Lebensmittelhülle auf Basis von Cellulose mit fungizider Ausstattung sowie Verfahren zum Schutz von Lebensmittelhüllen auf Basis von Cellulose vor Schimmelbefall**

(71) Anmelder: CaseTech GmbH, 29699 Bomlitz (DE)
(72) Erfinder: Henze-Wethkamp, Heinrich, 29664 Walsrode (DE); Krallmann, Anton, 29862 Bad Fallingbostel (DE)
(74) Vertreter: polypatent

(57) **Zusammenfassung**

Die vorliegende Erfindung betrifft schlauchförmige Lebensmittelhüllen auf Basis von Cellulose mit fungizider Ausstattung sowie ein Verfahren zum Schutz solcher Lebensmittelhüllen vor Schimmelbefall.

## Beschreibung

Die vorliegende Erfindung betrifft schlauchförmige Lebensmittelhüllen auf Basis von Cellulose mit fungizider Ausstattung sowie ein Verfahren zum Schutz solcher Lebensmittelhüllen vor Schimmelbefall.

Die mit Wurst gefüllten Cellulosedarmsorten haben das Problem, dass sie vor dem Füllen und insbesondere auch nach dem Füllen, also z.B. während der Reifezeit der Rohwürste, von unerwünschten Schimmelpilzen und anderen Mikroorganismen befallen werden können. Nach dem Befall können sich die Schimmelpilze auf dem Cellulosefaserdarm vermehren. Mit dem Wachstum dieser Mikroorganismen leidet die Qualität des Cellulosedarms und auch die Qualität des gefüllten Bräts. Der Cellulosedarm verliert durch den Befall mit den Mikroorganismen seine Festigkeit und die Würste mit Schimmelbefall sind unverkäuflich und damit wertlos.

Das eigentliche Hüllenmaterial besteht aus Cellulose, nämlich Cellulosehydrat, das auch als regenerierte Cellulose oder Zellglas bezeichnet wird. Die Celluloseschicht enthält vorzugsweise in ihrer Wandung eine Faserverstärkung, z.B. aus Hanffaserpapier, die auf einer oder beiden Oberflächen mit Cellulose bedeckt ist. Diese als Faserdarm oder Cellulosefaserdarm bezeichneten Wursthüllen werden in allen Kalibersorten eingesetzt.

Die Nahrungsmittelhülle wird auf übliche Weise, beispielsweise nach dem Viskoseverfahren, hergestellt. Hierbei wird ein Schlauch oder eine zu einem Schlauch geformte Faserbahn, z.B. aus Papier oder Hanffasern, durch eine Ringdüse auf der Innen- und/oder Außenseite mit alkalischer Viskoselösung beschichtet und mit einer sauren Fällflüssigkeit behandelt, welche die Koagulation der Viskose bewirkt. Die Viskoselösung enthält gegebenenfalls die zur Ausbildung einer weißen oder farbigen Hülle erforderlichen Farbstoffpigmente. Zur Herstellung verstärkungsfreier Cellulosehüllen wird die Viskose schlauchförmig direkt in das Fällbad ausgepresst. Der erhaltene, gegebenenfalls faserverstärkte Schlauch aus Cellulosehydrat-Gel wird nach dem Trocknen und nach der Fertigstellung auf seiner Außenseite mit der erfindungsgemäßen Beschichtung versehen.

In der Literatur sind für diese Aufgaben mehrere fungizide Verbindungen bekannt. Eine solche Methode ist in der US-A 4 867 204 (= DE-A 27 21 427) offenbart. Gemäß dieser Methode wird das Wachstum der Mikroorganismen durch ein wasserlösliches antimykotisches Mittel verhindert. Das antimykotische Mittel ist vorzugsweise Propylenglykol, Kalium-, Natrium- oder Calciumpropionat, Kalium-, Natrium- oder Calciumsorbat, Propionsäure oder ein niederer Alkylester der para-Hydroxy-benzoesäure.

Aus DE-A 198 60 142 und DE-A-196 25 094 sind Schlauchfolien bekannt, die mit Wasser und gegebenenfalls einem üblichen Fungizid, beispielsweise eine quaternäre Ammoniumverbindung, und/oder mit einem üblichen Konservierungsmittel vorzugsweise auf beide Seiten der Schlauchfolien besprüht werden.

In der EP-A 190 630 ist eine gegebenenfalls faserverstärkte Nahrungsmittelhülle auf Basis von regenerierter Cellulose, von Celluloseethern oder anderen hydrophilen Polymeren offenbart, die mit mindestens 40 - 45 Gew.-% Wasser füllfertig vorbefeuchtet ist. Um die Hülle vor dem Befall mit Bakterien, Schimmelpilzen oder anderen Mikroorganismen zu schützen, ist sie mit einem antimykotisch wirksamen Mittel behandelt. Das Mittel ist bevorzugt ein para-Hydroxybenzoesäurealkylester.

Eine Hülle aus filmbildenden, hydrophilen Polymeren, insbesondere aus regenerierter Cellulose, ist auch in der US-A 3 864 499 beschrieben. Dispergiert in den Polymeren sind öl-lösliche Additive, insbesondere Anti-Oxidantien, Biocide, Farbstoffe, UV-Absorber, Geschmacks- oder Geruchsstoffe. Daneben ist eine Cellulose-Wursthülle offenbart, die ein lebensmittelrechtlich zugelassenes Antimykotikum enthält. Das Antimykotikum ist bevorzugt para-Hydroxybenzoesäuremethylester, -ethylester oder -propylester.

Es ist nun Aufgabe der Erfindung, schlauchförmige Hüllen auf Basis von Cellulose so zu behandeln oder auszurüsten, dass auch nach dem Befall der Hüllen mit Schimmelpilzen das Wachstum auf den Hüllen sicher verhindert wird. Im Idealfall wird von außen eine Imprägnierung oder eine Überzugsschicht mit einer entsprechenden fungiziden Wirksubstanz aufgetragen.

Weiterhin ist es Aufgabe der Erfindung, dass die Behandlung oder Ausrüstung oder die von außen aufgebrachte Imprägnierung im Großen und Ganzen wässerungsstabil ist. Da Cellulosefaserdarm vor dem Füllvorgang gewässert wird, muss die Imprägnierung so beschaffen sein, dass die fungizide Wirkung auch noch nach der üblichen Wässerungszeit ohne nennenswerten Verlust gegeben ist.

Es wurde nun überraschenderweise gefunden, dass sich Carnosol, Carnosolsäure, Rosmarinöl, Rosmarinextrakte, Salbeiöl und Salbeiextrakte hervorragend als fungizid wirksame Bestandteile in Beschichtungen oder Imprägnierungen von cellulosebasierten Lebensmittelhüllen verwenden lassen.

Gelöst wird die oben genannte Aufgabe daher durch eine schlauchförmige cellulosebasierte Lebensmittelhülle ausgestattet mit einer fungiziden Beschichtung oder Imprägnierung, dadurch gekennzeichnet, dass die Beschichtung oder Imprägnierung als fungizid wirksamen Bestandteil ein oder mehrere Substanzen aus der Gruppe Carnosol, Carnosolsäure, Rosmarinöl, Rosmarinextrakt, Salbeiöl und Salbeiextrakt umfasst.

Carnosol und Carnosolsäure sind Bestandteile des Rosmarins und des Salbeis. Carnosolsäure wird als fettlösliches Antioxidans Konservierungsmittel und Aromastoff in Lebensmitteln wie Fleischwaren, Ölen und Fetten, Mehl, Milchpulver, Fischprodukten, Saucen, sowie in Tierfutter eingesetzt. In einem Gutachten vom Juni 2008 bescheinigte die Europäische Behörde für Lebensmittelsicherheit (EFSA) die Unbedenklichkeit von Carnosolsäure zur Verwendung in Lebensmitteln. In den USA besitzt Rosmarinöl, das bis zu 30 % Carnosolsäure und Carnosol enthält, seit 1965 (FEMA) bzw. 1970 (FDA) eine Einstufung als GRAS (Generally Reported As Safe) und kann in Lebensmitteln verwendet werden.

Rosmarinöl und Salbeiöl gewinnt man z.B. mittels Wasserdampfdestillation des Rosmarinkrauts bzw. des Salbeikrauts. Rosmarinextrakte und Salbeiextrakte gewinnt man z.B. aus dem Rosmarinkraut bzw. dem Salbeikraut durch Acetonextraktion, durch Extraktion mit superkritischem Kohlendioxid, durch ethanolische Extraktion oder durch eine zweistufige Extraktion mit Hexan und Ethanol. Rosmarinöl, Rosmarinextrakt, Salbeiöl und Salbeiextrakt im Sinne der vorliegenden Erfindung sind alle durch Extraktionsverfahren, Destillationsverfahren oder sonstige Aufschlussverfahren aus Rosmarinkraut bzw. Salbeikraut, deren Blätter oder sonstigen Bestandteilen gewonnenen Zusammensetzungen.

Tocopherole, Butylhydroxyanisol (BHA), Butylhydroxytoluol (BHT) und Gallate sind als Radikalfänger und somit als Antioxidantien bekannt. Sie sind insbesondere in lipophiler Umgebung wirksam.

Im Rahmen der vorliegenden Erfindung wurde nun weiterhin überraschend gefunden, dass sich die fungizide Wirkung der Beschichtung oder Imprägnierung der Lebensmittelhülle überproportional steigern lässt, wenn die Beschichtung oder Imprägnierung zusätzlich ein oder mehrere Substanzen aus der Gruppe der Tocopherole, Butylhydroxyanisol, Butylhydroxytoluol und der Gallate umfasst.

Die fungizid wirksame Beschichtung oder Imprägnierung der vorliegenden Erfindung umfasst vorzugsweise ein öliges Lösungsmittel. Dieses wirkt insbesondere als Lösungsmittel für die Bestandteile der fungiziden Zusammensetzung mit der die Beschichtung oder Imprägnierung hergestellt wird und ermöglicht z.B. durch feines Versprühen einer entsprechenden Zusammensetzung eine gleichmäßig verteilte Beschichtung oder Imprägnierung. Als Lösungsmittel eignen sich Triacylglycerine und Paraffinöle, insbesondere solche, die unter Normalbedingungen flüssig sind. Bevorzugt wird Paraffinöl eingesetzt.

In einer bevorzugten Ausführungsform der Erfindung umfasst die Beschichtung oder Imprägnierung der Lebensmittelhülle a) Carnosol und/oder Carnosolsäure, und b) Butylhydroxyanisol und/oder Butylhydroxytoluol. Besonders bevorzugt im Rahmen der vorliegenden sind somit Beschichtungen oder Imprägnierungen, die z.B. Carnosol und Butylhydroxyanisol enthalten; oder Carnosol und Butylhydroxytoluol; oder Carnosolsäure und Butylhydroxyanisol; oder Carnosolsäure und Butylhydroxytoluol; oder Carnosol, Carnosolsäure und Butylhydroxyanisol; oder Carnosol, Carnosolsäure und Butylhydroxytoluol. Ganz besonders bevorzugt ist, wenn die Beschichtung oder Imprägnierung Carnosolsäure und Butylhydroxyanisol enthält.

Bezüglich der Mengen der wirksamen Bestandteile in den Beschichtungen oder Imprägnierungen der erfindungsgemäßen cellulosebasierten Lebensmittelhüllen wurde gefunden, dass vorzugsweise der Anteil an den ein oder mehreren Substanzen aus der Gruppe Carnosol, Carnosolsäure, Rosmarinöl, Rosmarinextrakt, Salbeiöl und Salbeiextrakt 0,01 bis 3,5 Gew.-%, bevorzugt 0,02 bis 0,7 Gew.-%, besonders bevorzugt 0,03 bis 0,20 Gew.-%, ganz besonders bevorzugt 0,04 bis 0,15 Gew.-%, bezogen auf die trockene Lebensmittelhülle beträgt. Eine "trockene cellulosebasierte Lebensmittelhülle" enthält noch 5 bis 10 Gew.-% Restfeuchtigkeit (Wasser) gemessen bei 23°C und 65% relativer Feuchte (r.F.). In jedem Fall gelten die oben genannten Mengenbereiche auch für den Gesamtanteil an Carnosol, Carnosolsäure, Rosmarinöl, Rosmarinextrakt, Salbeiöl und Salbeiextrakt in Beschichtungen oder Imprägnierungen der erfindungsgemäßen Lebensmittelhüllen.

Der Anteil an den ein oder mehreren Substanzen aus der Gruppe der Tocopherole, Butylhydroxyanisol, Butylhydroxytoluol und der Gallate beträgt vorzugsweise 0,01 bis 3,5 Gew.-%, bevorzugt 0,02 bis 0,7 Gew.-%, besonders bevorzugt 0,03 bis 0,20 Gew.-%, ganz besonders bevorzugt 0,04 bis 0,15 Gew.-%, bezogen auf die trockene Lebensmittelhülle. In jedem Fall gelten die oben genannten Mengenbereiche auch für den Gesamtanteil an Tocopherole, Butylhydroxyanisol, Butylhydroxytoluol und der Gallate in Beschichtungen oder Imprägnierungen der erfindungsgemäßen Lebensmittelhüllen.

Beim Mengenverhältnis der beiden Substanzgruppen zueinander wurde gefunden, dass der Anteil in Gew.-% bezogen auf die trockene Lebensmittelhülle an den ein oder mehreren Substanzen aus der Gruppe der Tocopherole, Butylhydroxyanisol, Butylhydroxytoluol und der Gallate im Verhältnis zum Anteil in Gew.-% bezogen auf die trockene Lebensmittelhülle an den ein oder mehreren Substanzen aus der Gruppe Carnosol, Carnosolsäure, Rosmarinöl, Rosmarinextrakt, Salbeiöl und Salbeiextrakt vorzugsweise zwischen 1:10 und 10:1, bevorzugt zwischen 1:5 und 5:1, und besonders bevorzugt zwischen 1:2 und 2:1, liegt. In jedem Fall gelten die oben genannten Mengenverhältnisse auch für das Gesamtmengenverhältnis von Tocopherolen, Butylhydroxyanisol, Butylhydroxytoluol und der Gallaten zu Carnosol, Carnosolsäure, Rosmarinöl, Rosmarinextrakten, Salbeiöl und Salbeiextrakten in Beschichtungen oder Imprägnierungen der erfindungsgemäßen Lebensmittelhüllen. Als erfindungsgemäße Lebensmittelhüllen gelten alle cellulosebasierten Lebensmittelhüllen, insbesondere solche aus Cellulosedarm, aus Cellulosefaserdarm oder aus cellulosebasiertem Textildarm.

Besonders bevorzugt sind solche erfindungsgemäßen Lebensmittelhüllen, bei denen die Beschichtung oder Imprägnierung von außen auf die Lebensmittelhülle aufgetragen ist.

Die erfindungsgemäßen Lebensmittelhülle können auch in geraffter Form vorliegen. Dabei zeigt sich, dass die fungizide Wirksamkeit der erfindungsgemäßen Beschichtungen oder Imprägnierungen erhalten bleibt, wenn die gerafften Hüllen mit Wurstbrät gefüllt und dabei entrafft werden.

Gegenstand der vorliegenden Erfindung sind naturgemäß auch Würste umfassend eine wie oben beschriebene erfindungsgemäße Lebensmittelhülle und gefüllt mit Wurstbrät.

Ein weiterer Gegenstand der vorliegenden Erfindung ist ein Verfahren zum Schutz von schlauchförmigen cellulosebasierten Lebensmittelhüllen vor Schimmelbefall, wobei die Lebensmittelhülle mit einer fungiziden Beschichtung oder Imprägnierung versehen wird, dadurch gekennzeichnet, dass die Beschichtung oder Imprägnierung als fungizid wirksamen Bestandteil ein oder mehrere Substanzen aus der Gruppe Carnosol, Carnosolsäure, Rosmarinöl, Rosmarinextrakt, Salbeiöl und Salbeiextrakt umfasst.

Wie oben beschrieben, ist es besonders vorteilhaft, wenn in dem Verfahren die Beschichtung oder Imprägnierung zusätzlich ein oder mehrere Substanzen aus der Gruppe der Tocopherole, Butylhydroxyanisol, Butylhydroxytoluol und der Gallate umfasst.

Auch die übrigen Ausgestaltungen des erfindungsgemäßen Verfahrens sehen die Verwendung einer Lebensmittelhülle mit einer fungizider Beschichtung oder Imprägnierung wie oben beschrieben vor, z.B. dass die Beschichtung oder Imprägnierung ein öliges Lösungsmittel, bevorzugt Paraffinöl, umfasst.

Das Auftragen der Beschichtung oder Imprägnierung kann auf übliche Weisen erfolgen. In der Regel wird die Lebensmittelhülle bahnförmig über eine Umrollmaschine umgerollt und beim Umrollen wird diese auf beiden Seiten mit einer Beschichtung oder Imprägnierung versehen. Die Beschichtung oder Imprägnierung kann z.B. dadurch erfolgen, dass die Lebensmittelhülle durch ein Flüssigkeitsbad läuft, oder dass das Beschichtungs- oder Imprägnierungsmittel durch Besprühen aufgetragen wird. Es kann weiterhin auch mit einem Walzenauftrag, ähnlich dem Druckvorgang aufgebracht werden. Besonders effektiv ist es, wenn das Beschichtungs- oder Imprägnierungsmittel fein verteilt auf die Oberfläche der Lebensmittelhülle gelangt. Hier bieten sich das Sprühen durch feine Düsen oder eine Verteilung durch eine Ultraschallaufbereitung an. Die feine Verteilung beim Sprühverfahren wird durch einen hohen Druck durch die Düsen erreicht, wobei die fein verteilten Tröpfchen auf sehr hohe Geschwindigkeiten beschleunigt werden. Mit Hilfe einer Ultraschallanlage lassen sich kleinere Tröpfchengröße erzeugen, so dass noch eine bessere Verteilung auf der Lebensmittelhülle erzielt werden kann.

Als besonders wirkungsvoll haben sich die Carnosolsäure-Produkte, wie zum Beispiel von Aquanova unter der Bezeichnung Pro Extract 150, gezeigt. Es ist bekannt, dass Carnosolsäure als fettlösliches Antioxidans, als Konservierungsmittel und als Aromastoff in Lebensmitteln, wie Fleischwaren, Ölen und Fetten, Mehl, Milchpulver, Fischprodukten, Saucen, sowie in Tierfutter eingesetzt wird. Neben dem antioxidativen Effekt besitzt Carnosolsäure auch eine antimikrobielle Wirksamkeit, etwa gegen Staphylococcus aureus. Diese wird auf eine Hemmung der Nucleinsäurebiosynthese in Bakterien zurückgeführt. Im Tierversuch zeigte Carnosolsäure auch chemoprotektive Wirkung gegen Karzinogene.

Im Weiteren wurde als Antioxidationsmittel auch Buthylhydroxyanisol (BHA) erprobt. BHA wirkt den Veränderungen, die Sauerstoff an Fetten, Farben und Aromen hervorruft, wirksam entgegen. Aus der Literatur ist bekannt, das BHA neben guten Wirkungen bei Fetten, Farben und Aromen auch zugleich eine schwach ausgeprägte Wirksamkeit gegen Mikroorganismen besitzt.

BHA kann z.B. unter dem Handelsnamen Tenox von der Firma Eastman bezogen werden. Von Seiten dieser Firma werden Empfehlungen für den Einsatz für Lebensmittel (Wurstwaren, Snack-Artikel usw.) und auch für Verpackungen (Zugabe zu Wachsbeschichtungen für Lebensmittelverpackungen) gegeben.

Tenox ist sehr gut mit z.B. Paraffinöl mischbar und das Paraffinöl in Lebensmittelqualität wird als Raffschmiermittel bei der Konfektionierung der cellulosebasierten Lebensmittelhüllen zu Raffsträngen benötigt.

Überraschenderweise können Carnosol, Carnosolsäure, Rosmarinöl, Rosmarinextrakt, Salbeiöl und Salbeiextrakt auch auf Verpackungsstoffen und auf nicht-essbaren Lebensmittelumhüllungen wie Cellulosefaserdarm zur fungiziden Behandlung angewendet werden.

Bei der Sprühmethode kann das Carnosol, die Carnosolsäure, das Rosmarinöl, der Rosmarinextrakt, das Salbeiöl und/oder der Salbeiextrakt zusammen mit z.B. Polysorbat, Alkohol und Wasser mit vorzugsweise Paraffinöl verdünnt werden. Die Konzentration des Wirkstoffes kann in der öligen Beschichtungsflüssigkeit insgesamt 2 bis 70 %, vorzugsweise 3 bis 20, insbesondere 4 bis 7 Gew.% betragen. Die Lösung wird über 1 oder 2 oder mehrere Stoffdüsen bei einem Flüssigkeitsdruck von ca. 2 bis 6 bar und bei einer Düsengröße von z.B. 0,5 mm versprüht. Die Durchflussmenge wird so eingestellt, dass die cellulosebasierte Lebensmittelhülle beim Raffvorgang ca. 0,5 bis 5 %, insbesondere eine Menge von 2 bis 3,5 % bezogen auf den trocken eingesetzten Darm erhält. Für eine gute Verteilung der Wirksubstanz ist die beim Versprühen erzielte Tröpfchengröße mit entscheidend. Je feiner die Tröpfchengröße beim Versprühen eingestellt werden kann, desto dichter liegen die Tröpfchen auf der Oberfläche der cellulosebasierten Lebensmittelhülle. Mit kleiner werdendem Abstand steigt die Wirksamkeit gegenüber unerwünschter Schimmelbildung. Bei einer Tröpfchengröße von ca. 20 bis 50 µm werden die besten Ergebnisse erzielt.

Carnosol und Carnsolsäure können mit Hilfe der HPLC-Methode, die von Okamura N., Fujimoto Y., Kuwabara S., Yagi A. in "High-performance liquid chromatographic determination of carnosic acid and carnosol in Rosmarinus officinalis and Salvia officinalis", 1994, J. Chromatogr A679:381-386, beschrieben wurde, qualitativ und quantitativ nachgewiesen werden. Die Konzentration von Carnosol und/oder Carnsolsäure auf der Lebensmittelhülle nach dem Aufbringen lässt sich so sicher bestimmen. Auf analoge Weise lassen sich auch Rosmarinöl, Rosmarinextrakt, Salbeiöl und Salbeiextrakt nachweisen.

Sinnvoll hat sich die Zugabe von bekannten Konservierungsmitteln wie Kaliumsorbat oder Natriumsorbat in Verbindung mit leicht abgesenktem pH-Wert auf ca. 3-3,5 erwiesen. Der pH-Wert kann z.B. über die Zugabe von Citronensäure abgesenkt werden.

Noch ein weiterer Gegenstand der vorliegenden Erfindung ist die Verwendung von ein oder mehreren Substanzen aus der Gruppe Carnosol, Carnosolsäure, Rosmarinöl, Rosmarinextrakt, Salbeiöl und Salbeiextrakt zur fungiziden Behandlung einer Lebensmittelhülle oder von Wurstwaren.

In einer bevorzugten Ausführungsform der Erfindung ist die Verwendung dadurch gekennzeichnet, dass die ein oder mehreren Substanzen aus der Gruppe Carnosol, Carnosolsäure, Rosmarinöl, Rosmarinextrakt, Salbeiöl und Salbeiextrakt als Bestandteil einer fungiziden Beschichtung oder Imprägnierung einer Lebensmittelhülle oder einer fungiziden Beschichtung oder Imprägnierung von Wurstwaren eingesetzt werden.

In einer Alternative der Erfindung wird die Verwendung von ein oder mehreren Substanzen aus der Gruppe Carnosol, Carnosolsäure, Rosmarinöl, Rosmarinextrakt, Salbeiöl und Salbeiextrakt als Bestandteil einer Beschichtung oder Imprägnierung einer Lebensmittelhülle oder als Bestandteil einer Beschichtung oder Imprägnierung von Wurstwaren beansprucht.

Dabei ist bevorzugt, wenn die Lebensmittelhülle eine cellulosebasierte Lebensmittelhülle, bevorzugt eine schlauchförmige cellulosebasierte Lebensmittelhülle, weiter bevorzugt eine cellulosebasierte Wursthülle, ist.

Die Erfindung wird durch die nachfolgenden Beispiele näher erläutert

### Beispiele

### Beispiel 1

### (Mischung aus Carnosolsäure mit Paraffinöl)

Ein Cellulosefaserdarmhülle Walsroder FR 60 wird im flachen Zustand auf ihren beiden Außenseiten mit Lösung aus
a. 20 Gew.-% NovoSol - PSP von der Firma Aquanova Darmstadt (mit 30 % Carnosolsäure in der Mischung)
b. 80 Gew.-% Paraffinöl von der Firma CG-Chemikalien unter der Bezeichnung "Paraffinöl, perliquidum-dünnflüssig Ph.Eur., USP, FDA"
während des Raffvorganges im aufgeblasenen Zustand in einer Gesamtmenge von 3 Gew.-% bezogen auf Trockendarm besprüht.

### Beispiel 2

### (Mischung aus Carnosolsäure und Tenox mit Paraffinöl):

Ein Cellulosefaserdarmhülle Walsroder FR 60 wird im flachen Zustand auf ihren beiden Außenseiten mit Lösung aus
c. 10 Gew.-% NovoSol - PSP von der Firma Aquanova Darmstadt (mit 30 % Carnosolsäure in der Mischung)
d. 10 Gew.-% Tenox 4b von der Firma Eastmann (mit 20 % BHA in der Mischung) und
e. 80 Gew.-% Paraffinöl wie aus Beispiel 1
während des Raffvorganges im aufgeblasenen Zustand in einer Gesamtmenge von 3 % bezogen auf Trockendarm besprüht.

### Vergleichsbeispiel 1

Der in Beispiel 1 genannte Cellulosefaserdarm wird während des Raffvorgangs mit einer Mischung von
a. 30 Gew.-% Tenox 4b von der Firma Eastmann (mit 20 % Buthylhydroxyanisol in der Mischung) und
b. 70 Gew.-% Paraffinöl wie aus Beispiel 1
während des Raffvorganges im aufgeblasenen Zustand in einer Gesamtmenge von 3 Gew.-% bezogen auf Trockendarm besprüht.

### Vergleichsbeispiel 2

Der in Beispiel 1 genannte Cellulosefaserdarm wird während des Raffvorgangs mit einer Mischung von
c. 3 Gew.-% Kaliumsorbat von der Firma CG-Chemikalien unter der Bezeichnung "Kaliumsorbat FCC IV E 202"
d. 97 Gew.-% Trinkwasser
im aufgeblasenen Zustand in einer Gesamtmenge von 15 Gew.-% bezogen auf Trockendarm besprüht.

Die oben genannten Muster werden ungewässert und nach Wässerung mit Rohwurst gefüllt. Bei dem Wässerungsvorgang wird die Schlauchhülle für eine Zeitspanne von 30 Minuten in fließendes warmes Wasser getaucht. Die gefüllten Würste werden zur Hälfte in eine Schimmellösung, die aus 99,7 Gew.-% Wasser und 0,3 Gew.-% M-EK-72 Mold von Fa. Chr. Hansen besteht, getaucht. Unter dieser Bezeichnung wird eine stark wachsende, weißlich aussehende Schimmelsorte unter dem Namen Penicillium nalgiovense vertrieben. Die obere Hälfte der gefüllten Wurst kommt nicht in Berührung mit der wässrigen Schimmellösung. Nach dem Herausziehen aus der Schimmellösung werden die Würste in einer Reifekammer gelagert. In regelmäßigen Abständen, Beispiel nach 2, 4 und 8 Tagen, werden die gefüllten Würste auf Schimmelausbildung geprüft.

### Testverfahren

Die oben genannten Muster werden ungewässert und nach Wässerung mit Rohwurst gefüllt. Bei dem Wässerungsvorgang wird die Schlauchhülle für eine Zeitspanne von 30 Minuten in fließendes warmes Wasser getaucht. Durch den Wässerungsvorgang nimmt der Darm Wasser auf und wird sehr viel geschmeidiger. Mit der höheren Geschmeidigkeit lässt sich der Darm auf einen größeren Durchmesser füllen und es gibt weniger Ausfälle beim Abclipppen des Darmes.

### Beurteilungskriterien

### 1. Wachstum Schimmelsporen

Wenn die Schimmelsporen die Oberfläche des Darms nach einer Mindestwartezeit Tagen komplett bedeckt haben, wird die Note 6 und bei keinerlei Wachstum des Schimmels wird die Note 1 vergeben.

**Tabelle 1: Beurteilung Schimmelwachstum**

| Darmsorte Walsroder FR 60 | Menge Carnosolsäure (1) | Menge Butyl-hydroxy-anisol⁽¹⁾ | Menge Kalium-sorbat⁽¹⁾ | Wässerung vor dem Füllen | Schimmelunterdrückung nach 4 Tagen | Schimmelunterdrückung nach 8 Tagen |
|---|---|---|---|---|---|---|
| Beispiel 1 A | 0,18 | | | Ja | 1 | 1,5 |
| Beispiel 1 B | 0,18 | | | nein | 1 | 1 |
| Beispiel 2 A | 0,09 | 0,06 | | Ja | 1 | 1,5 |
| Beispiel 2 B | 0,09 | 0,06 | | nein | 1 | 1 |
| Vergl.-Bsp. 1 A | | 0,24 | | Ja | 2,5 | 5,5 |
| Vergl.-Bsp. 1 B | | 0,24 | | nein | 1,5 | 5 |
| Vergl.-Bsp. 2 A | | | 0,45 | Ja | 3,5 | 5 |
| Vergl.-Bsp. 2 B | | | 0,45 | nein | 1,5 | 4 |

| | | | | | | |
|---|---|---|---|---|---|---|
| ⁽¹⁾ in Gewichtsprozent bezogen auf Darmgewicht trocken | | | | | | |

## Patentansprüche

1. Schlauchförmige cellulosebasierte Lebensmittelhülle ausgestattet mit einer fungiziden Beschichtung oder Imprägnierung, **dadurch gekennzeichnet, dass** die Beschichtung oder Imprägnierung als fungizid wirksamen Bestandteil ein oder mehrere Substanzen aus der Gruppe Carnosol, Carnosolsäure, Rosmarinöl, Rosmarinextrakt, Salbeiöl und Salbeiextrakt umfasst.

2. Lebensmittelhülle nach Anspruch 1, **dadurch gekennzeichnet, dass** die Beschichtung oder Imprägnierung zusätzlich ein oder mehrere Substanzen aus der Gruppe der Tocopherole, Butylhydroxyanisol, Butylhydroxytoluol und der Gallate umfasst.

3. Lebensmittelhülle nach Anspruch 1 oder 2, **dadurch gekennzeichnet, dass** die Beschichtung oder Imprägnierung ein öliges Lösungsmittel, bevorzugt Paraffinöl, umfasst.

4. Lebensmittelhülle nach einem der vorherigen Ansprüche, **dadurch gekennzeichnet, dass** die Beschichtung oder Imprägnierung a) Carnosol und/oder Carnosolsäure, und b) Butylhydroxyanisol und/oder Butylhydroxytoluol umfasst.

5. Lebensmittelhülle nach einem der vorherigen Ansprüche, **dadurch gekennzeichnet, dass** die Beschichtung oder Imprägnierung von außen auf die Lebensmittelhülle aufgetragen ist.

6. Lebensmittelhülle nach einem der vorherigen Ansprüche, **dadurch gekennzeichnet, dass** der Anteil an den ein oder mehreren Substanzen aus der Gruppe Carnosol, Carnosolsäure, Rosmarinöl, Rosmarinextrakt, Salbeiöl und Salbeiextrakt 0,01 bis 3,5 Gew.-%, bevorzugt 0,02 bis 0,7 Gew.-%, besonders bevorzugt 0,03 bis 0,20 Gew.-%, ganz besonders bevorzugt 0,04 bis 0,15 Gew.-%, bezogen auf die trockene Lebensmittelhülle beträgt; und/oder **dadurch gekennzeichnet, dass** der Anteil an den ein oder mehreren Substanzen aus der Gruppe der Tocopherole, Butylhydroxyanisol, Butylhydroxytoluol und der Gallate 0,01 bis 3,5 Gew.-%, bevorzugt 0,02 bis 0,7 Gew.-%, besonders bevorzugt 0,03 bis 0,20 Gew.-%, ganz besonders bevorzugt 0,04 bis 0,15 Gew.-%, bezogen auf die trockene Lebensmittelhülle beträgt.

7. Lebensmittelhülle nach einem der vorherigen Ansprüche, **dadurch gekennzeichnet, dass** der Anteil in Gew.-% bezogen auf die trockene Lebensmittelhülle an den ein oder mehreren Substanzen aus der Gruppe der Tocopherole, Butylhydroxyanisol, Butylhydroxytoluol und der Gallate im Verhältnis zum Anteil in Gew.-% bezogen auf die trockene Lebensmittelhülle an den ein oder mehreren Substanzen aus der Gruppe Carnosol, Carnosolsäure, Rosmarinöl, Rosmarinextrakt, Salbeiöl und Salbeiextrakt zwischen 1:10 und 10:1, bevorzugt zwischen 1:5 und 5:1, und besonders bevorzugt zwischen 1:2 und 2:1, liegt.

8. Lebensmittelhülle nach einem der vorherigen Ansprüche, **dadurch gekennzeichnet, dass** die Beschichtung oder Imprägnierung zusätzlich Kaliumsorbat und/oder Natriumsorbat umfasst und/oder einen pH-Wert von 3 bis 3,5 aufweist.

9. Lebensmittelhülle nach einem der vorherigen Ansprüche, **dadurch gekennzeichnet, dass** die Lebensmittelhülle in geraffter Form vorliegt.

10. Wurst umfassend eine Lebensmittelhülle nach einem der Ansprüche 1 bis 8 sowie von der Lebensmittelhülle umschlossenes Wurstbrät.

11. Verfahren zum Schutz von schlauchförmigen cellulosebasierten Lebensmittelhüllen vor Schimmelbefall, wobei die Lebensmittelhülle mit einer fungiziden Beschichtung oder Imprägnierung versehen wird, **dadurch gekennzeichnet, dass** die Beschichtung oder Imprägnierung als fungizid wirksamen Bestandteil ein oder mehrere Substanzen aus der Gruppe Carnosol, Carnosolsäure, Rosmarinöl, Rosmarinextrakt, Salbeiöl und Salbeiextrakt umfasst.

12. Verfahren nach Anspruch 11, **dadurch gekennzeichnet, dass** die Beschichtung oder Imprägnierung zusätzlich ein oder mehrere Substanzen aus der Gruppe der Tocopherole, Butylhydroxyanisol, Butylhydroxytoluol und der Gallate umfasst.

13. Verwendung von ein oder mehreren Substanzen aus der Gruppe Carnosol, Carnosolsäure, Rosmarinöl, Rosmarinextrakt, Salbeiöl und Salbeiextrakt zur fungiziden Behandlung einer Lebensmittelhülle oder von Wurstwaren.

14. Verwendung nach Anspruch 13, **dadurch gekennzeichnet, dass** die ein oder mehreren Substanzen aus der Gruppe Carnosol, Carnosolsäure, Rosmarinöl, Rosmarinextrakt, Salbeiöl und Salbeiextrakt als Bestandteil einer fungiziden Beschichtung oder Imprägnierung einer Lebensmittelhülle oder einer fungiziden Beschichtung oder Imprägnierung von Wurstwaren eingesetzt werden.

15. Verwendung von ein oder mehreren Substanzen aus der Gruppe Carnosol, Carnosolsäure, Rosmarinöl, Rosmarinextrakt, Salbeiöl und Salbeiextrakt als Bestandteil einer Beschichtung oder Imprägnierung einer Lebensmittelhülle oder als Bestandteil einer Beschichtung oder Imprägnierung von Wurstwaren.

16. Verwendung nach einem der Ansprüche 13 bis 15, **dadurch gekennzeichnet, dass** die Lebensmittelhülle eine cellulosebasierte Lebensmittelhülle, bevorzugt eine schlauchförmige cellulosebasierte Lebensmittelhülle, weiter bevorzugt eine cellulosebasierte Wursthülle, ist.
